# EUROPÄISCHE PATENTSCHRIFT

(11) **EP 3 434 952 B1**
(45) Veröffentlichungstag und Bekanntmachung des Hinweises auf die Patenterteilung: **23.09.2020**
(21) Anmeldenummer: 18183853.3
(22) Anmeldetag: 17.07.2018
(51) Int. Cl.: F16L 17/10, F16L 49/02, G01M 3/28

(54) **DICHTUNGSRING ZUM ABDICHTEN DER VERBINDUNGSSTELLE ZWEIER STIRNSEITIG ANEINANDERGELEGTER HOHLZYLINDRISCHER ROHRE**
SEALING RING FOR SEALING THE CONNECTION POINT BETWEEN TWO HOLLOW CYLINDRICAL PIPES CONNECTED AT THEIR FRONT ENDS
BAGUE D'ÉTANCHÉITÉ DESTINÉE À L'ÉTANCHÉIFICATION DU POINT DE RACCORDEMENT DE DEUX TUYAUX CYLINDRIQUES CREUX PLACÉS L'UN CONTRE L'AUTRE SUR LEURS FACES FRONTALES

(30) Priorität: 26.07.2017 DE 102017212879
(43) Veröffentlichungstag der Anmeldung: 30.01.2019
(73) Patentinhaber: Steinzeug-Keramo GmbH, 50226 Frechen (DE)
(72) Erfinder: Bohle, Dr.-Ing. Ulrich, 50226 Frechen (DE); Flick, Karl-Heinz, 50226 Frechen (DE); Gergert, Arthur, 96114 Hirschaid (DE); Lechner, Michael, 96269 Großheirath (DE); Neumann, Uwe, 55129 Mainz-Hechtsheim (DE); Schäfer, Matthias, 96465 Neustadt/Cbg. (DE)
(74) Vertreter: dompatent von Kreisler Selting Werner - Partnerschaft von Patent- und Rechtsanwälten mbB

(56) Entgegenhaltungen:
- CH-A5- 661 109
- DE-A1- 19 934 365
- DE-C- 387 157
- US-A- 5 851 036
- US-A1- 2010 096 851
- US-A1- 2014 116 528

## Beschreibung

Die Erfindung betrifft einen Dichtungsring zum Abdichten der Verbindungsstelle zweier stirnseitig aneinandergelegter hohlzylindrischer Rohre sowie ein entsprechendes Verfahren.

Hohlzylindrische Rohre werden an ihren stirnseitigen Enden typischerweise aneinandergelegt, um eine Rohrleitung zu bilden, durch die ein fluides Medium hindurch transportiert wird. Bei den Rohren kann es sich beispielsweise um erdverlegte Steinzeugrohre handeln, die zur Fortleitung von Abwässern eingesetzt werden. Die Verbindungsstelle zwischen den beiden stirnseitigen Enden der aneinandergelegten Rohre ist abzudichten. Hierzu ist es bekannt, einen Dichtungsring oder ein Dichtungsband außen derart über beide Rohrenden und die Verbindungsstelle zu legen, dass kein Fluid zwischen den beiden Rohrenden hindurch nach außen gelangen kann.

Insbesondere bei erdverlegten Rohren ist es bekannt, Dichtungsringe mit einer hohlzylindrischen Manschette, beispielsweise aus einem elastomeren Material, zu verwenden, die eine äußere Manschettenmantelfläche und eine innere Manschettenmantelfläche aufweisen. Die innere Manschettenmantelfläche weist eine in Umfangsrichtung umlaufende ringförmige Vertiefung auf, die in proximaler und in distaler Richtung, das heißt in Längsrichtung der Manschette vor und hinter der Vertiefung, jeweils von einer nach innen ragenden ringförmigen Dichtlippe begrenzt ist. Bei der Dichtlippe handelt es sich somit um einen nach innen von der inneren Manschettenmantelfläche abstehenden ringförmig umlaufenden Vorsprung. Die Dichtlippen können einstückig aus demselben Material wie die Manschette geformt sein oder aus einem separaten Material gefertigt sein. Beim Aufbringen der Manschette auf die äußere Rohrmantelfläche des abzudichtenden Rohrendes liegen die beiden die betreffende Vertiefung begrenzenden Dichtlippen auf der äußeren Rohrmantelfläche desselben Rohres eng anliegend auf. Die Vertiefung kontaktiert dabei die äußere Rohrmantelfläche nicht, so dass zwischen der Vertiefung, der äußeren Rohrmantelfläche und den beiden Dichtlippen ein Hohlraum gebildet ist.

Gerade bei erdverlegten Rohren ist es von besonderer Bedeutung, eine nachträgliche Überprüfung der Dichtheit der abgedichteten Verbindungsstellen durchzuführen und im Bedarfsfall eine nachträgliche Verbesserung der Dichtwirkung zu ermöglichen. Herkömmlicherweise erfolgt zur Überprüfung der Dichtheit von innerhalb der abgedichteten Rohre eine Druckbeaufschlagung der Verbindungsstelle. Im Falle einer festgestellten Undichtigkeit, beispielsweise bei schnellem oder einen Grenzwert überschreitendem Entweichen des aufgebauten Drucks, muss die Verbindungsstelle von innen abgedichtet werden.

US 5,851,036 A beschreibt eine Verbindungsmanschette für fluiddichte Rohrverbindungen.

DE 387157 A, US 2010/0096851 A1, CH 661 109 A5, US 2014/0116528 A1 und DE 199 34 365 A1 beschreiben jeweils Verbindungs- und Dichtmanschetten zum Verbinden zweier Rohre.

Der Erfindung liegt die Aufgabe zugrunde, einen verbesserten Dichtungsring und ein verbessertes Verfahren zum Abdichten der Verbindungsstelle zweier stirnseitig aneinandergelegter hohlzylindrischer Rohre zu schaffen.

Der erfindungsgemäße Dichtungsring ist definiert durch die Merkmale von Anspruch 1.

Demnach ist die Manschette mit mindestens einem Kanal versehen, der die Vertiefung durch die Manschette hindurch mit der inneren oder äußeren Umgebung der Manschette verbindet. Wenn die Dichtung auf ein Rohrende aufgebracht ist, kann durch den Kanal hindurch eine Druckbeaufschlagung des gebildeten Hohlraums zur Überprüfung der Dichtheit der Dichtung erfolgen. Bei festgestellter Undichtigkeit kann nachträglich durch den Kanal hindurch zusätzliches Dichtungsmaterial in den Hohlraum eingebracht werden, um die Dichtwirkung zu verbessern.

Ein erster Kanal ist so ausgebildet, dass der Hohlraum mit der äußeren Mantelfläche der Manschette verbunden wird. Zudem ist ein zweiter Kanal so ausgebildet, dass der Hohlraum mit der inneren Mantelfläche der Manschette verbunden ist, vorzugsweise im Bereich der Verbindungsstelle der beiden aneinandergelegten Rohre.

Der Kanal kann mit einem Rückschlagventil versehen sein, um einen in dem Hohlraum aufgebauten Überdruck nicht durch den Kanal hindurch entweichen zu lassen. Alternativ oder ergänzend kann das dem Hohlraum gegenüberliegende Ende des Kanals mit einer abnehmbaren Kappe verschlossen sein. Das dem Hohlraum gegenüberliegende Ende des Kanals kann zudem mit einem Schlauch verbindbar oder versehen sein, um die Druckprüfung und oder das nachträgliche Einbringen von Dichtmaterial zu vereinfachen. Im Falle eines Kanals, der den Hohlraum mit der inneren Manschettenmantelfläche verbindet, ist ein solcher Schlauch besonders vorteilhaft, der bis in das Innere eines der beiden verbundenen Rohre geführt wird und dort an der inneren Rohrmantelfläche befestigt wird. Dieses Rohrende kann ebenfalls mit einem Ventil und oder einer Kappe versehen sein. Dadurch ist eine Dichtheitsprüfung auch aus dem Inneren des Rohres möglich, indem nachträglich ein durch das Rohr bewegtes Dichtheitsprüfgerät über den Schlauch mit dem Kanal und dem Hohlraum verbunden wird.

Nach erfolgter Dichtheitsprüfung kann das Ergebnis der Prüfung in Form einer das Prüfergebnis enthaltenden Information an der Dichtung angebracht werden, beispielsweise in Form eines Barcodes. Das Dichtheitsprüfergebnis sollte so an der Manschette angebracht werden, dass dieses nachträglich von außen und/oder von innen einfach erkennbar ist. Beispielsweise kann das Dichtheitsprüfergebnis an der inneren Manschettenmantelfläche im Bereich der Verbindungsstelle zweier stirnseitig aneinandergelegter Rohre angebracht werden. Dadurch ist ein nachträgliches Erkennen und Überprüfen des Dichtheitsprüfergebnisses mit Hilfe einer Kamera oder eines die Information auslesenden Scanners möglich, die bzw. der durch die verbundenen Rohre hindurch vorgeschoben oder gefahren wird.

Besonders vorteilhaft ist es, im Bereich der Verbindungsstelle der beiden aneinandergelegten Rohre eine Information, wie zum Beispiel einen Barcode oder ein NFC, anzubringen, die die Verbindungsstelle eindeutig kennzeichnet. Die Information kann an der Dichtung, der Manschette und insbesondere an der inneren Manschettenmantelfläche angebracht sein. Die Information beinhaltet vorzugsweise auch das jeweils aktuelle Prüfergebnis der letzten Dichtheitsprüfung. Beim Auslesen der Information kann somit beurteilt werden, ob eine Dichtheitsprüfung durchzuführen ist. Insbesondere kann das Ergebnis einer neu durchgeführten Dichtheitsprüfung mit dem in der Information enthaltenen Ergebnis der vorangegangenen Dichtheitsprüfung verglichen werden. Nach erfolgter Dichtheitsprüfung wird das neue Prüfergebnis in der Information hinterlegt.

Das Ergebnis der Dichtheitsprüfung kann auch an einem anderen Ort, zum Beispiel in der Software des Prüfgeräts, gespeichert sein. Das Auslesen der an der Dichtung angebrachten Information über die Verbindungsstelle erlaubt einen Zugriff auf das gespeicherte Prüfergebnis. Auf diese Weise kann eine besonders einfache Zuordnung zwischen Verbindungsstelle und jeweils aktuellem Prüfergebnis vorgenommen werden.

Die Manschette kann im Bereich eines ersten (proximalen) stirnseitigen Endes zum festen Anbringen an der äußeren Mantelfläche eines Rohrendes ausgebildet sein, zum Beispiel durch Ankleben oder Angießen. Im Bereich des gegenüberliegenden (distalen) stirnseitigen Endes ist die Manschette dann mit der Vertiefung und dem Kanal versehen. Der Kanal kann ferner dazu ausgebildet sein, durch Einfüllen eines Gases, zum Beispiel Luft, die Manschette aufzublasen und dadurch in Form zu bringen und an die abzudichtenden äußeren Rohrmantelflächen anzupressen. Beispielsweise kann der Kanal mit einem inneren Hohlraum der Manschette verbunden sein, der mit dem in den Kanal eingeleiteten Gas gefüllt wird.

Die innere Manschettenmantelfläche kann mindestens zwei der oben beschriebenen Vertiefungen nebst proximaler und distaler Dichtlippe aufweisen. Hierbei kann die erste Vertiefung im Bereich eines stirnseitigen Endes vorgesehen sein, während die andere Vertiefung im Bereich des anderen stirnseitigen Endes ausgebildet ist. Zwischen den beiden Vertiefungen verbleibt dann ein mittiger Bereich zum Abdecken der Verbindungsstelle der beiden stirnseitig aneinander gelegten Rohre. Als Verbindungsstelle ist hierbei der zwischen den aneinander gelegten stirnseitigen Enden der Rohre verbleibende Spalt gemeint. Die innere Manschettenmantelfläche der Dichtung deckt diesen Spalt ab.

Die innere Manschettenmantelfläche kann mit einem wurzelwuchs hemmenden Material, zum Beispiel einem Kupferband versehen sein. Das wurzelwuchshemmende Material kann zum Beispiel in eine Aussparung in der inneren Manschettenmantelfläche eingelassen sein. Das wurzelwuchshemmende Material schützt die Dichtung von Eindringen von Wurzelwuchs.

Das erfindungsgemäße Verfahren ist definiert durch die Merkmale von Anspruch 5.

Demnach wird nach Aufbringen des Dichtungsrings auf die beiden aneinandergelegten Rohrenden der beiden zu verbindenden Rohre eine Dichtheitsprüfung durchgeführt, indem der zwischen den Dichtlippen, der Vertiefung und der äußeren Mantelfläche gebildete Hohlraum durch den Kanal hindurch von außen mit einem Druck beaufschlagt wird, beispielsweise mit Luft oder einem Prüfgas. Anschließend wird der Druck in dem Hohlraum überwacht. Bei rapidem Absinken des Drucks kann somit auf eine bestehende Undichtigkeit oder zumindest eine nicht ausreichende Dichtwirkung des aufgebrachten Dichtungsrings geschlossen werden. In diesem Fall kann nachträglich durch den Kanal hindurch von außen zusätzliches Dichtmaterial in den Hohlraum eingebracht werden, um die Dichtwirkung zu erhöhen. Bei dem Dichtmaterial kann es sich beispielsweise um einen Dichtschaum oder ein erhärtendes Dichtfluid handeln. Das Dichtmaterial wird dabei individuell an das jeweilige Fluid angepasst, gegen dessen Eindringen der Dichtungsring oder die Verbindungsstelle schützen soll. Die Druckmessung bei der Dichtheitsprüfung kann mit Hilfe eines Drucksensors erfolgen, der von außen durch den Kanal hindurch in den Hohlraum eingebracht oder zumindest in den Kanal eingeschoben wird.

Die Manschette kann beispielsweise dadurch an einem Rohrende angebracht werden, indem die Manschette über die Verbindungsstelle auf ein Rohrende aufgeschoben wird und ein Gas in den Kanal eingeleitet wird, um einen inneren, mit dem Kanal verbundenen Hohlraum zu befüllen. Die Manschette wird dadurch in ihre endgültige Form gebracht und an die äußere Rohrmantelfläche angepresst. Der innere Hohlraum kann auch so angeordnet sein, dass die Dichtlippen durch Einleiten eines Gases in den Kanal ausgerichtet werden und/oder die Manschette aufgeblasen wird. Es ist denkbar, dass die Manschette nach außen umgestülpt an einem noch nicht verbunden Rohrende befestigt wird, bevor die abzudichtenden Rohrenden aneinandergelegt werden. Durch Befüllen der Manschette wird der Dichtungsring dann über die Verbindungsstelle und das andere Rohrende gelegt und gegen dessen äußere Rohrmantelfläche gepresst.

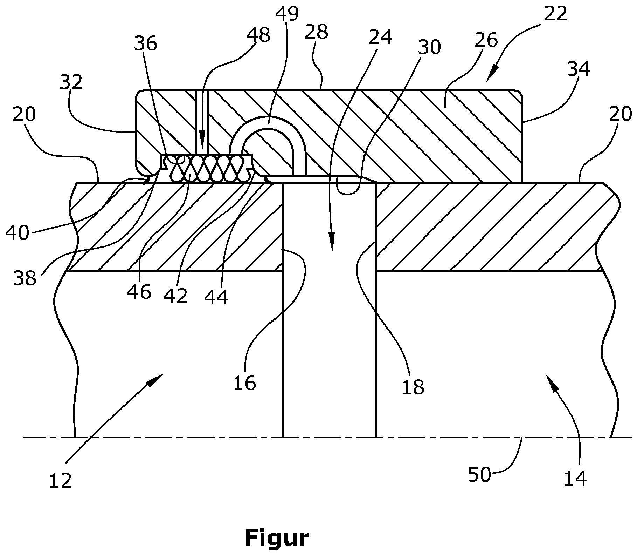

Anhand der Figur wird ein Ausführungsbeispiel der Erfindung näher erläutert. Die Figur zeigt einen Längsschnitt durch das Ausführungsbeispiel.

Zwei Rohre 12, 14 werden an ihren stirnseitigen Enden 16, 18 fluchtend aneinandergelegt. Auf die äußeren Mantelflächen 20 der beiden Rohre 12, 14 wird der erfindungsgemäße Dichtungsring 22 eng aufgebracht. Dabei ragt der Dichtungsring 22 in Längsrichtung der Rohre 12, 14 zu beiden Seiten im gleichen Abstand über die Verbindungsstelle 24 hinaus.

Der Dichtungsring 22 weist eine hohlzylindrische Manschette 26 auf, die eine äußere Manschettenmantelfläche 28 und eine innere Manschettenmantelfläche 30 aufweist. Die Manschette hat ein erstes stirnseitige Ende 32 und ein gegenüberliegendes zweites stirnseitiges Ende 34. Im Bereich des ersten stirnseitigen Endes 32 ist die innere Manschettenmantelfläche 30 mit einer Vertiefung 36 versehen, die nach außen gegenüber der inneren Manschettenmantelfläche 30 zurückweicht. Die Vertiefung 36 läuft in Umfangsrichtung der zylindrischen Manschette 26 vollständig um und ist dadurch als ringförmige Nut ausgebildet.

Distal der Vertiefung 36, das heißt an der dem ersten stirnseitigen Ende 32 zugewandten Rand 38 der Vertiefung 36 ist diese von einer ersten ringförmigen Dichtlippe 40 begrenzt. In entsprechender Weise ist die Vertiefung 36 proximal, das heißt an ihren dem zweiten stirnseitigen Ende 34 zugewandten Rand 42, durch eine zweite ringförmige Dichtlippe 44 begrenzt. Die beiden Dichtlippen 40, 44 ragen gegenüber der Vertiefung 36 und gegenüber der inneren Mantelfläche 30 nach innen und berühren die äußere Rohrmantelfläche 20 des Rohres 12 eng anliegend. Die Vertiefung 36 berührt die äußere Rohrmantelfläche 20 nicht. Vielmehr ist zwischen der äußeren Rohrmantelfläche 20, der Vertiefung 36 und den beiden Dichtlippen 40, 44 ein Hohlraum 46 gebildet.

Die Vertiefung 36 ist durch einen ersten Kanal 48 mit der äußeren Manschettenmantelfläche 28 verbunden. Der Kanal 48 läuft radial in Bezug auf die Mittellängsachse 50 der Rohre 12, 14 und der Manschette 26 vollständig durch die Manschette 26 hindurch. Der erste Kanal 48 verbindet den Hohlraum 46 mit der äußeren Umgebung des Dichtungsrings 22 und der Rohre 12, 14. Ein zweiter Kanal 49 verbindet den Hohlraum 46 mit der inneren Manschettenmantelfläche 30.

Während das Ausführungsbeispiel nur eine Vertiefung 36 mit nur einem Hohlraum 46 zeigt, kann der Dichtungsring 22 auch mehrere Vertiefungen aufweisen, die jeweils proximal und distal von entsprechenden Dichtungslippen begrenzt sind, um entsprechende Hohlräume mit den Rohrmantelflächen zu bilden. Während in dem Ausführungsbeispiel nur ein Kanal 48 gezeigt ist, kann jede der Vertiefungen auch mit mehreren entsprechenden Kanälen versehen sein.

Nach Aufbringen des Dichtungsrings 22 auf die beiden Rohrmantelflächen 20 der Rohrenden, 16, 18 wird zur Überprüfung der Dichtheit der geschaffenen Verbindung der Hohlraum 46 durch den ersten Kanal 48 hindurch von außen mit einem Gas befüllt und so mit einem Druck beaufschlagt. Dabei kann ein Gas durch den ersten Kanal 48 in den Hohlraum 46 gepresst werden. Anschließend wird mit Hilfe eines in der Figur nicht dargestellten Drucksensors beobachtet, wie sich der aufgebaute Druck in dem Hohlraum 46 mit der Zeit verändert. Bei rapidem, einen geeigneten Schwellenwert übersteigenden Druckabfall wird auf ein Leck oder eine nicht ausreichende Dichtwirkung geschlossen. Hierzu kann ein Drucksensor von außen in den ersten Kanal 48 eingeschoben werden. Bei festgestelltem Druckabfall, der beispielsweise einen Schwellenwert übersteigt, kann die Dichtwirkung des Dichtungsrings bzw. die Dichtheit der Verbindungsstelle 24 nachträglich erhöht werden, indem durch den ersten Kanal 48 hindurch von außen ein Dichtmaterial in den

Hohlraum 46 eingebracht wird. Bei dem Dichtmaterial kann es sich um einen Dichtschaum oder um eine erhärtende Dichtflüssigkeit bzw. eine erhärtende Dichtmasse handeln.

Erfindungsgemäß entfällt die umständliche und aufwendige Notwendigkeit einer nachträglichen Prüfung der Dichtwirkung durch Druckbeaufschlagung der Verbindungsstelle 24 von innerhalb der Rohre 12, 14. Auch ein nachträgliches Verbessern der Dichtwirkung ist vereinfacht, weil Dichtmaterial gezielt in den Bereich des Dichtungsrings 22 von außen her eingetragen werden kann. Dies kann beispielsweise in gefülltem Zustand der Rohre 12, 14 erfolgen, ohne dass diese zuvor entleert werden müssen.

## Patentansprüche

1. Dichtungsring (22) zum Abdichten der Verbindungstelle zweier stirnseitig aneinandergelegter hohlzylindrischer Rohre (12, 14), mit einer hohlzylindrischen Manschette (26), die eine äußere Manschettenmantelfläche (28) und eine innere Manschettenmantelfläche (30) aufweist, wobei die innere Manschettenmantelfläche (30) mindestens eine in Umfangsrichtung verlaufende ringförmige Vertiefung (36) aufweist, die in proximaler und in distaler Richtung jeweils von mindestens einer nach innen ragenden Dichtlippe (40, 44) derart begrenzt ist, dass in einem an einem Rohrende angebrachten Zustand des Dichtungsrings (22) ein Hohlraum (46) zwischen der äußeren Rohrmantelfläche, den beiden Dichtungslippen und der Vertiefung (36) gebildet ist, wobei die Manschette (26) mit mindestens zwei Kanälen (48, 49) versehen ist, die die Vertiefung (36) durch die Manschette (26) hindurch mit der Umgebung der Manschette verbinden,
**dadurch gekennzeichnet,**
**dass** ein erster der mindestens zwei Kanäle (48) die Vertiefung (36) mit der äußeren Manschettenmantelfläche (28) und ein zweiter der mindestens zwei Kanäle (49) die Vertiefung (36) mit der inneren Manschettenmantelfläche (30) verbindet.

2. Dichtungsring (22) nach Anspruch 1, **dadurch gekennzeichnet, dass** die Vertiefung (36) im Bereich eines ersten stirnseitigen Endes (32) der Manschette (26) ausgebildet ist, während das gegenüberliegende stirnseitige Ende (34) der Manschette (26) fest an einem Rohrende (18) anbringbar ist.

3. Dichtungsring (22) nach Anspruch 1, **dadurch gekennzeichnet, dass** die innere Manschettenmantelfläche (30) mindestens zwei in Umfangsrichtung umlaufende ringförmige Vertiefungen (36) aufweist, die in proximaler und in distaler Richtung jeweils von einer nach innen ragenden ringförmigen Dichtlippe (40, 44) begrenzt ist und mit den Dichtlippen (40, 44) und der äußeren Rohrmantelfläche einen Hohlraum (46) bildet und die durch einen Kanal (48, 49) mit der Umgebung der Manschette verbunden ist.

4. Dichtungsring (22) nach einem der Ansprüche 1 bis 3, **dadurch gekennzeichnet, dass** jede Vertiefung (36) derart an ein stirnseitiges Ende (16, 18) der Manschette (26) angrenzend angeordnet ist, dass ein in Längsrichtung der Manschette (26) mittlerer Bereich der inneren Manschettenmantelfläche (30) zum Abdecken der Verbindungsstelle (24) zweier stirnseitig aneinandergelegter hohlzylindrischer Rohre (12, 14) ausgebildet ist.

5. Dichtungsring (22) nach einem der vorhergehenden Ansprüche, **dadurch gekennzeichnet, dass** die innere Manschettenmantelfläche (30) mit einem wurzelwuchshemmenden Material, zum Beispiel einem Kupferband, versehen ist.

6. Dichtungsring (22) nach einem der vorhergehenden Ansprüche, **dadurch gekennzeichnet, dass** die Manschette (26) aus einem Elastomer gefertigt ist.

7. Verfahren zum Abdichten der Verbindungsstelle (24) zweier stirnseitig aneinander gelegter hohlzylindrischer Rohre (12, 14) unter Verwendung eines Dichtungsrings (22) nach einem der vorhergehenden Ansprüche, wobei die Manschette (26) auf den äußeren Rohrmantelflächen (20) beider Rohre (12, 14) angebracht wird und wobei durch den einen der mindestens zwei Kanäle (48, 49) hindurch eine Druckbeaufschlagung des Hohlraums (46) erfolgt, um dadurch die Dichtheit der Verbindung zu prüfen.

8. Verfahren nach dem vorhergehenden Anspruch, **dadurch gekennzeichnet, dass** nach der Druckbeaufschlagung mit Hilfe eines Drucksensors durch den Kanal (48, 49) hindurch der Druck in dem Hohlraum (46) gemessen wird.

9. Verfahren nach Anspruch 7 oder 8, **dadurch gekennzeichnet, dass** bei Feststellen einer nicht ausreichenden Dichtheit der Hohlraum (46) durch den Kanal (48, 49) hindurch mit einem zusätzlichen Dichtmaterial befüllt wird.

10. Verfahren nach dem vorhergehenden Anspruch, **dadurch gekennzeichnet, dass** es sich bei dem Dichtmaterial um einen Dichtschaum oder ein Dichtfluid handelt.

11. Verfahren nach einem der Ansprüche 7 bis 10, **dadurch gekennzeichnet, dass** zum Anbringen der Manschette (26) die Manschette über die Verbindungsstelle (24) geschoben wird und anschließend über den Kanal (48) mit einem Gas befüllt wird, um durch Aufblasen der Manschette diese an die äußeren Rohrmantelflächen (20) anzupressen.

12. Verfahren nach einem der Ansprüche 7 bis 11, **dadurch gekennzeichnet, dass** nach der Dichtheitsprüfung das Dichtheitsprüfergebnis gespeichert wird, wobei die Manschette (26) mit einer die Verbindungsstelle eindeutig identifizierenden Information versehen ist, um über die Information das Prüfergebnis abrufen und aktualisieren zu können.

## Claims

1. Sealing ring (22) for sealing the connection site of two hollow cylindrical tubes (12, 14) positioned end on end, comprising a hollow cylindrical sleeve (26) which comprises an outer lateral sleeve surface (28) and an inner lateral sleeve surface (30), the inner lateral sleeve surface (30) having at least one annular recess (36) extending in the circumferential direction, which recess is delimited in the proximal and distal directions by at least one inwardly projecting sealing lip (40, 44) such that, when the sealing ring (22) is in a state attached to a pipe end, a cavity (46) is formed between the outer lateral tube surface, the two sealing lips and the recess (36), the sleeve (26) being provided with at least two channels (48, 49) which connect the recess (36) with the environment of the sleeve through the sleeve (26),
**characterized in that**
a first of the at least two channels (48) connects the recess (36) with the outer lateral sleeve surface (28) and a second of the at least two channels (49) connects the recess (36) with the inner lateral sleeve surface (30).

2. Sealing ring (22) of claim 1, **characterized in that** the recess (36) is formed in the region of a first face end (32) of the sleeve (26), while the opposite face end (34) of the sleeve (26) can be firmly attached to a pipe end (18).

3. Sealing ring (22) of claim 1, **characterized in that** the inner lateral sleeve surface (30) has at least two circumferentially extending annular recesses (36) which are each delimited in the proximal and distal directions by an inwardly projecting annular sealing lip (40, 44) and forms a cavity (46 with the sealing lips (40, 44) and the outer lateral tube surface and is connected to the environment of the sleeve via a channel 48, 49).

4. Sealing ring (22) of one of claims 1 to 3, **characterized in that** each recess (36) is arranged adjoining a face end (16, 18) of the sleeve (26) such that a central region of the inner lateral sleeve surface (30) in the longitudinal direction of the sleeve (26) is formed for covering the connection site (24) of two hollow cylindrical tubes (12, 14) set against each other by their end faces.

5. Sealing ring (22) of one of the preceding claims, **characterized in that** the inner lateral sleeve surface (30) is provided with a root growth-inhibiting material, for example a copper strip.

6. Sealing ring (22) of one of the preceding claims, **characterized in that** the sleeve (26) is made of an elastomer.

7. Method for sealing the connection site (24) of two hollow cylindrical tubes (12, 14) set against each other by their end faces using a sealing ring (22) of one of the preceding claims, wherein the sleeve (26) is attached to the outer lateral tube surfaces (20) of both tubes (12, 14), and wherein pressure is applied to the cavity (46) via the one of the at least two channels (48, 49) to thereby test the tightness of the connection.

8. Method of the preceding claim, **characterized in that** after the application of pressure, the pressure in the cavity (46) is measured via the channel (48, 49) using a pressure sensor.

9. Method of claim 7 or 8, **characterized in that** upon determination of insufficient tightness, the cavity (46) is filled with an additional sealing material via the channel (48, 49).

10. Method of the preceding claim, **characterized in that** the sealing material is a sealing foam or a sealing fluid.

11. Method of one of claims 7 to 10, **characterized in that** in order to attach the sleeve (26), the sleeve is pushed over the connection site (24) and is then filled with a gas via the channel (48) iso as to press the sleeve against the outer lateral tube surfaces (20) by inflating the sleeve.

12. Method of one of claims 7 to 11, **characterized in that** after the tightness test, the tightness test result is stored, the sleeve (26) being provided with information that clearly identifies the connection site, so that the test result can be retrieved and updated using the information.

## Revendications

1. Bague d'étanchéité (22) destinée à étanchéifier la jonction de deux tubes cylindriques creux aboutés frontalement (12, 14), dotée d'un manchon cylindrique creux (26), lequel comporte une surface extérieure de manchon (28) et une surface intérieure de manchon (30), dans laquelle la surface intérieure de manchon (30) comporte au moins une dépression (36) annulaire s'étendant dans la direction du pourtour, celle-ci étant respectivement délimitée dans la direction proximale et dans la direction distale par au moins une lèvre d'étanchéité (40, 44) dépassant vers l'intérieur, de telle sorte que, dans un état de la bague d'étanchéité (22) arrangé à une extrémité de tube, un espace creux (46) est formé entre la surface extérieure de manchon, les deux lèvres d'étanchéité et la dépression (36), dans laquelle le manchon (26) est prévu avec au moins deux canaux (48, 49), lesquels relient la dépression (36) à l'environnement du manchon (26) à travers le manchon,
**caractérisée en ce qu'**un premier des au moins deux canaux (48) relie la dépression (36) à la surface extérieure de manchon (28) et un deuxième des au moins deux canaux (49) relie la dépression (36) à la surface intérieure de manchon (30).

2. Bague d'étanchéité (22) selon la revendication 1, **caractérisée en ce que** la dépression (36) est réalisée dans la zone d'une première extrémité frontale (32) du manchon (26), pendant que l'extrémité frontale opposée (34) du manchon (26) peut être arrangée de manière fixe à une extrémité de tube (18).

3. Bague d'étanchéité (22) selon la revendication 1, **caractérisée en ce que** la surface intérieure de manchon (30) comporte au moins deux dépressions (36) annulaires s'étendant dans la direction du pourtour, lesquelles sont respectivement délimitées dans la direction proximale et dans la direction distale par au moins une lèvre d'étanchéité (40, 44) dépassant vers l'intérieur et forment un espace creux (46) avec les lèvres d'étanchéité (40, 44) et la surface externe de tube et sont reliées à l'environnement du manchon par un canal (48, 49).

4. Bague d'étanchéité (22) selon l'une des revendications 1 à 3, **caractérisée en ce que** chaque dépression (36) est agencée comme contiguë à une extrémité frontale (16, 18) du manchon (26) de telle sorte qu'une zone de la surface intérieure de manchon (30), médiane dans la direction longitudinale du manchon (26), est réalisée pour recouvrir la jonction (24) de deux tubes cylindriques creux aboutés frontalement (12, 14).

5. Bague d'étanchéité (22) selon l'une des revendications précédentes, **caractérisée en ce que** la surface intérieure de manchon (30) est prévue dotée d'un matériau inhibiteur d'enracinement, comme par exemple une bande de cuivre.

6. Bague d'étanchéité (22) selon l'une des revendications précédentes, **caractérisée en ce que** le manchon (26) est fait d'un élastomère.

7. Procédé d'étanchéification de la jonction (24) de deux tubes cylindriques creux aboutés frontalement (12, 14) utilisant une bague d'étanchéité (22) selon l'une des revendications précédentes,
dans lequel le manchon (26) est arrangé sur les surfaces externes de tube (20) des deux tubes (12, 14) et
dans lequel une application de pression à l'espace creux (46) s'effectue à travers l'un des au moins deux canaux (48, 49), afin de contrôler l'étanchéité de la jonction.

8. Procédé selon la revendication précédente, **caractérisé en ce qu'**après l'application de pression, la pression dans l'espace creux (46) est mesurée à l'aide d'un capteur de pression à travers le canal (48, 49).

9. Procédé selon la revendication 7 ou 8, **caractérisé en ce que** lorsqu'il est déterminé que l'étanchéité est insuffisante, l'espace creux (46) est rempli d'un matériau d'étanchéité à travers le canal (48, 49).

10. Procédé selon la revendication précédente, **caractérisé en ce que** le matériau d'étanchéité est une mousse d'étanchéité ou un fluide d'étanchéité.

11. Procédé selon l'une des revendications 7 à 10, **caractérisé en ce qu'**afin d'arranger le manchon (26), celui-ci est poussé sur la jonction (24) et rempli ensuite d'un gaz par le biais du canal (48), afin que le manchon appuie contre les surfaces externes de tube (20) par gonflement de celui-ci.

12. Procédé selon l'une des revendications 7 à 11, **caractérisé en ce qu'**après le contrôle de l'étanchéité, le résultat du contrôle de l'étanchéité est enregistré, dans lequel le manchon (26) est prévu doté d'une information identifiant la jonction de façon univoque, afin de pouvoir rappeler et actualiser le résultat du contrôle par le biais de l'information.
